# EUROPEAN PATENT APPLICATION

(11) **EP 4 579 933 A1**
(43) Date of publication of application: **02.07.2025**
(21) Application number: 24221764.4
(22) Date of filing: 19.12.2024
(51) Int. Cl.: H01M 50/536, H01M 4/13, H01M 10/42

(54) **ELECTRODE FOR SECONDARY BATTERY AND SECONDARY BATTERY COMPRISING THE SAME**

(30) Priority: 28.12.2023 KR 20230195654; 13.08.2024 KR 20240108124
(71) Applicant: SK On Co., Ltd., Seoul 03161 (KR)
(72) Inventor: YOU, Seung Jong, Daejeon 34124 (KR); PARK, Kyung Sup, Daejeon 34124 (KR); YANG, Jung Min, Daejeon 34124 (KR); WON, Jong Hyeon, Daejeon 34124 (KR); LEE, Dong Hoon, Daejeon 34124 (KR)
(74) Representative: Prüfer & Partner mbB Patentanwälte · Rechtsanwälte

(57) **Abstract**

The present disclosure relates to an electrode for a secondary battery and a secondary battery comprising the same, and the present disclosure provides an electrode for a secondary battery includes a first surface and a second surface, positioned opposite to the first surface, wherein the first surface includes a first active portion in which an electrode active material layer is formed on an electrode current collector and a first uncoated portion in which an electrode active material layer is not formed, wherein the second surface includes a second active portion in which an electrode active material layer is formed on an electrode current collector, and a second uncoated portion in which an electrode active material layer is not formed, independently of the first surface, wherein the first surface includes a first active portion insulating layer formed on the first active portion and a first uncoated portion insulating layer formed on the first uncoated portion, wherein the second surface includes a second active portion insulating layer formed on the second active portion and a second uncoated portion insulating layer formed on the second uncoated portion, and wherein a position of an end of the first active portion insulating layer and a position of an end of the second active portion insulating layer are different.

## Description

### TECHNICAL FIELD

The present disclosure generally relates to an electrode for a secondary battery and a secondary battery including the same.

### BACKGROUND

The electrode used in the lithium secondary battery may be manufactured by applying an electrode mixture including an electrode active material in the form of a slurry on an electrode current collector, drying the slurry to form an electrode active material layer, and rolling the electrode active material layer to have a predetermined electrode density.

The electrode manufactured as above may include a coated portion in which the electrode active material layer is formed and an uncoated portion in which the electrode active material layer is not formed, and the uncoated portion may be provided as an electrode tab.

The lithium secondary battery may be manufactured by alternately stacking a cathode and an anode and interposing a separator between the anode and the cathode. Accordingly, direct contact between the anode and the cathode may be prevented by being separated from each other by the separator. However, in the lithium secondary battery, for example, when the uncoated portion of the cathode is in contact with a portion of the anode, a short may occur, which may cause an abnormality such as ignition.

Meanwhile, the process of manufacturing an electrode as described above may include a rolling process of adjusting the electrode active material layer to a predetermined electrode density by pressurizing the layer. The coated portion and the uncoated portion may have different physical properties due to a difference in terms of the presence or absence of the electrode active material layer, and accordingly, pressures may be applied differently to the coated portion and the uncoated portion during the rolling process while the electrode is manufactured, and accordingly, the issues in which the electrode is fractured at a boundary between the coated portion and the uncoated portion or the electrode is disconnected during the process of welding the electrode tab may occur.

### SUMMARY

An example embodiment of the present disclosure is to provide an electrode which may prevent a short between electrodes in a secondary battery.

An example embodiment of the present disclosure is to improve safety of a battery by preventing a short between an anode and a cathode.

As an example embodiment, the present disclosure provides an electrode for a lithium secondary battery, the electrode for a secondary battery includes a first surface and a second surface, positioned opposite to the first surface, wherein the first surface includes a first active portion in which an electrode active material layer is formed on an electrode current collector, and a first uncoated portion in which an electrode active material layer is not formed, wherein the second surface includes a second active portion in which an electrode active material layer is formed on an electrode current collector, and a second uncoated portion in which an electrode active material layer is not formed, independently of the first surface, wherein the first surface includes a first active portion insulating layer formed on the first active portion, and a first uncoated portion insulating layer formed on the first uncoated portion, wherein the second surface includes a second active portion insulating layer formed on the second active portion, and a second uncoated portion insulating layer formed on the second uncoated portion, and wherein a position of an end of the first active portion insulating layer and a position of an end of the second active portion insulating layer are different.

The first active portion insulating layer and first uncoated portion insulating layer may be consecutive layers, the second active portion insulating layer and the second uncoated portion insulating layer may be consecutive layers, and a length of the first active portion insulating layer, a length from a boundary between the first active portion and the first uncoated portion to the end of the first active portion insulating layer, and a length of the second active portion insulating layer, a length from a boundary between the second active portion and the second uncoated portion to the end of the second active portion insulating layer, may be different.

A length of the first active portion insulating layer, a length from a boundary between the first active portion and the first uncoated portion to the end of the first active portion insulating layer, may be 1.3 or more times to 9 or fewer times than a length of the second active portion insulating layer, a length from a boundary between the second active portion and the second uncoated portion to the end of the second active portion insulating layer.

A length of the first active portion insulating layer, a length from a boundary between the first active portion and the first uncoated portion to the end of the first active portion insulating layer, may be 1.5 or more times to 7.5 or fewer times than a length of the second active portion insulating layer, a length from a boundary between the second active portion and the second uncoated portion to the end of the second active portion insulating layer.

A length of the first active portion insulating layer, the length from a boundary between the first active portion and the first uncoated portion to the end of the first active portion insulating layer, may be 2 or more times to 9 or fewer times than a length of the second active portion insulating layer, the length from a boundary between the second active portion and the second uncoated portion to the end of the second active portion insulating layer.

A distance between the end of the first active portion insulating layer and the end of the second active portion insulating layer may be 0.2 mm or more to 0.9 mm or less.

A distance between the end of the first active portion insulating layer and the end of the second active portion insulating layer may be 0.3 mm or more to 0.8 mm or less.

A distance between the end of the first active portion insulating layer and the end of the second active portion insulating layer may be 0.4 mm or more to 0.7 mm or less.

Each of the first active portion insulating layer and the second active portion insulating layer may have a length of 0.1 mm or more to 1.2 mm or less independently.

A length of the first active portion insulating layer may be 0.3 to 1.2 mm, and a length of the second active portion insulating layer is 0.1 to 1.0 mm.

A position of the end of the first uncoated portion insulating layer and a position of the end of the second uncoated portion insulating layer may be the same or different.

A distance between the end of the first uncoated portion insulating layer and the end of the second uncoated portion insulating layer may be 0.5 mm or less.

A length of each of the first uncoated portion insulating layer and the second uncoated portion insulating layer may be 1 to 12 mm independently.

Each of the first active portion insulating layer, the first uncoated portion insulating layer, the second active portion insulating layer and the second uncoated portion insulating layer may have a thickness of 3 to 40 µm independently.

The electrode may further include an electrode tab including the first uncoated portion or the second uncoated portion.

The electrode may be a cathode or an anode.

The electrode may further include a valley formed in each of a region in which the end of the first active portion insulating layer is present and a region in which the end of the second active portion insulating layer is present independently, wherein positions of the valleys in the first surface and the second surface may be different.

As other example embodiment, the present disclosure provides a secondary battery include at least one anode and at least one cathode, wherein the anode, the cathode, or a combination thereof may be the electrode for a secondary battery described above.

### BRIEF DESCRIPTION OF DRAWINGS

Predetermined aspects, features, and advantages of the present disclosure are illustrated by the following detailed description with reference to the accompanying drawings.
FIG. 1 is a diagram illustrating a mechanism by which a short may occur in a battery as an uncoated portion of a cathode is pushed;
FIG. 2 is a diagram illustrating a cross-sectional surface of an electrode in which an insulating layer is formed on surfaces of an uncoated portion and an active portion, illustrating an example embodiment in which a first active portion insulating layer and a second active portion insulating layer match each other on both surfaces of the electrode;
FIG. 3 is a diagram illustrating a mechanism by which a short may be prevented even when an uncoated portion of a cathode and an anode are in direct contact with each other by forming an insulating layer;
FIG. 4 is a diagram illustrating a cross-sectional surface of an electrode in which an insulating layer is formed on surfaces of an uncoated portion and an active portion, illustrating an example embodiment in which a first uncoated portion insulating layer and a second uncoated portion insulating layer mismatch each other on both surfaces of an electrode;
FIG. 5 is a diagram illustrating a cross-sectional surface of an electrode in which an insulating layer is formed on surfaces of an uncoated portion and an active portion, illustrating an example embodiment in which a first active portion insulating layer and a second active portion insulating layer mismatch each other on both surfaces of an electrode;
FIG. 6 is a diagram illustrating a cross-sectional surface of an electrode in which an insulating layer is formed on surfaces of an uncoated portion and an active portion, illustrating an example embodiment in which a first active portion insulating layer and a second active portion insulating layer mismatch each other and a first uncoated portion insulating layer and a second uncoated portion insulating layer mismatch each other on both surfaces of an electrode;
FIGS. 7A and 7B are diagrams illustrating a thickness profile of an electrode in FIG. 2, where FIG. 7A is a thickness profile before rolling, and FIG. 7B is a thickness profile after rolling;
FIG. 8 is a diagram illustrating a thickness profile after rolling in an electrode in FIG. 5;
FIG. 9 is a diagram illustrating a winding-type electrode assembly and a process of manufacturing the same according to an example embodiment of present disclosure;
FIG. 10 is a diagram illustrating an electrode stack used in manufacturing of a winding-type electrode assembly according to an example embodiment of present disclosure;

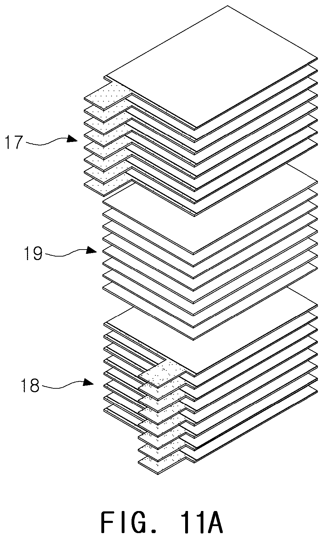

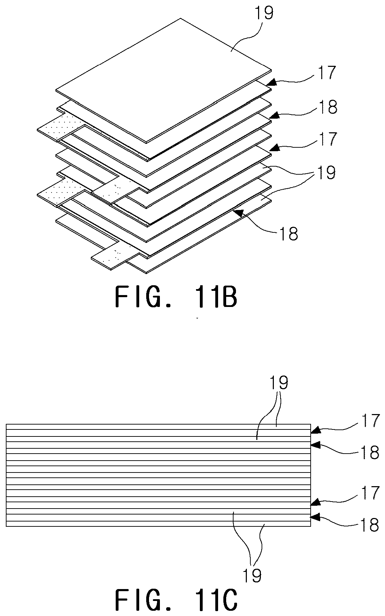

FIGS. 11A, 11B and 11C are diagrams illustrating a stack-type electrode assembly and a process of manufacturing the same according to an example embodiment of present disclosure, where providing a plurality of anodes, a plurality of cathodes and a plurality of separators having predetermined sizes is illustrated in FIG. 11A, alternately stacking a plurality of anodes and a plurality of cathodes and inserting a separator between the anodes and the cathodes is illustrated in FIG. 11B, and the manufactured stack-type electrode assembly including a stacking order such as cathode/separator/anode/separator is illustrated in FIG. 11C;
FIG. 12 is a diagram illustrating a secondary battery including a stack-type electrode assembly according to an example embodiment of present disclosure;
FIGS. 13A to 13D are diagrams illustrating a process of manufacturing an electrode used in manufacturing of a stack-type electrode assembly and an electrode obtained thereby according to an example embodiment of present disclosure, where a process of forming an electrode plate is illustrated in FIG. 13A, a slitting process is illustrated in FIG. 13B, and processes of notching the electrode plate to have an electrode tab and an electrode lead is illustrated in FIGS. 13C and 13D;
FIG. 14 is a diagram illustrating a stack-folding-type electrode assembly and a process of manufacturing the same according to an example embodiment of present disclosure;
FIG. 15 is a diagram illustrating a thickness profile of a first surface of an electrode obtained in embodiment 1 observed using a 3D microscope;
FIGS. 16A and 16B are images of a cathode fractured when tensile strength of a cathode obtained in embodiment 1 is measured, where FIG. 16A indicates a fractured state in an uncoated portion, and FIG. 16B indicates a fractured state in an active portion;
FIGS. 17A and 17B are images of an electrode tab manufactured by welding an uncoated portion of an electrode obtained in embodiment 1, where FIG. 17A is an image of a pre-welded electrode tab and FIG. 17B is an image of a main-welded electrode tab;
FIGS. 18A and 18B indicate thickness profiles of an electrode obtained in comparative example 1 before (FIG. 18A) and after (FIG. 18B) rolling of a first surface, analyzed using a 3-Dimensional(3D) microscope;
FIG. 19 is an image of a cross-sectional surface of an electrode obtained in comparative example 1 after rolling, imaged using a scanning electron microscope (SEM);
FIGS. 20A and 20B are images of an electrode tab manufactured by welding an uncoated portion of an electrode obtained in comparative example 1, where FIG. 20A is an image of a pre-welded electrode tab and FIG. 20B is an image of a main-welded electrode tab; and
FIGS. 21A and 21B are images of an electrode tab manufactured by welding an uncoated portion of an electrode obtained in comparative example 2, where FIG. 21A is an image of a pre-welded electrode tab, and FIG. 21B is an image of a main-welded electrode tab.

### DETAILED DESCRIPTION

The embodiments of the present disclosure are illustrated in embodiments with reference to the accompanying drawings. However, this is only exemplary, and the present disclosure is not limited to the specific embodiments described as examples.

In an example embodiment, a lithium electrode for a secondary battery which may prevent a short between an anode and a cathode may be provided.

The lithium secondary battery may include a porous separator or a solid electrolyte membrane interposed between the anode and the cathode to prevent direct contact between the cathode and the anode. However, in a process of manufacturing an electrode assembly or in a process of manufacturing an electrode, when a cathode uncoated portion is pushed, the cathode uncoated portion may be in direct contact with the anode, which may cause a short.

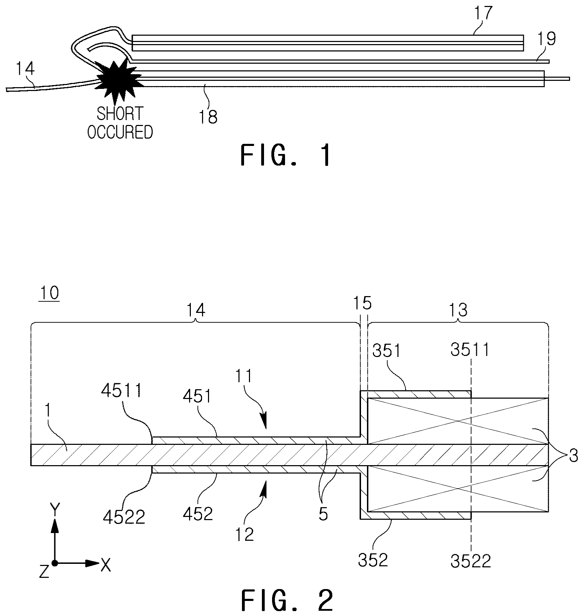

For example, an example of a short occurring due to pushing of the cathode uncoated portion 14 is illustrated in FIG. 1. FIG. 1 is a diagram illustrating an example in which, due to the pushing of the cathode uncoated portion 14 in the battery, the cathode uncoated portion 14 approaches the electrode assembly, and accordingly, the cathode uncoated portion 14 is in direct contact with the anode 18, such that a short occurs.

In this case, when the components of the anode and the cathode are in contact with each other, there may be a risk of fire due to a short, and accordingly, a safety device may be required to prevent a short between the anode and the cathode.

For example, FIG. 2 illustrates an example of an electrode in which an insulating layer is formed to prevent a short between the anode and the cathode. As illustrated in FIG. 2, the electrode 10 may include an electrode active material layer 3 including an electrode active material formed on an electrode current collector 1.

Specifically, the electrode may include a first surface 11 and a second surface 12, the other surface opposite to the first surface, and each of the first surface and the second surface may independently have an active portion 13 in which an electrode active material layer is formed on the electrode current collector and an uncoated portion 14 in which an electrode active material layer is not formed. The first surface may include a first active portion in which an electrode active material layer is formed on an electrode current collector and a first uncoated portion in which an electrode active material layer is not formed, and the second surface may include a second active portion in which an electrode active material layer is formed on an electrode current collector and a second uncoated portion in which an electrode active material layer is not formed, independently of the first surface. Also, the first surface may include a first active portion insulating layer 351 formed on the first active portion and a first uncoated portion insulating layer 451 formed on the first uncoated portion, and the second surface may include a second active portion insulating layer 352 formed on the second active portion and a second uncoated portion insulating layer 452 formed on the second uncoated portion.

The electrode may have an insulating layer 5 formed on at least a portion of the uncoated portion. The insulating layer may be included as a portion of a tab of a first electrode (e.g., cathode) when a cathode and an anode are stacked to form an electrode assembly, and even when the uncoated portion is in contact with a component of the anode, such as the anode active material layer of the second electrode (e.g., anode), electrical connection may be blocked and a short may be prevented.

Although not limited thereto, the insulating layer may be consecutive layers formed consecutively without a break. Specifically, as illustrated in FIG. 2, the first uncoated portion insulating layer formed on the first uncoated portion and the first active portion insulating layer formed on the first active portion may be individually consecutive layers, and may be consecutive layers formed consecutively between the first uncoated portion insulating layer and the first active portion insulating layer. Similarly, the second uncoated portion insulating layer formed on the second uncoated portion and the second active portion insulating layer formed on the second active portion may be individually consecutive layers, and may be consecutive layers formed consecutively between the second uncoated portion insulating layer and the second active portion insulating layer.

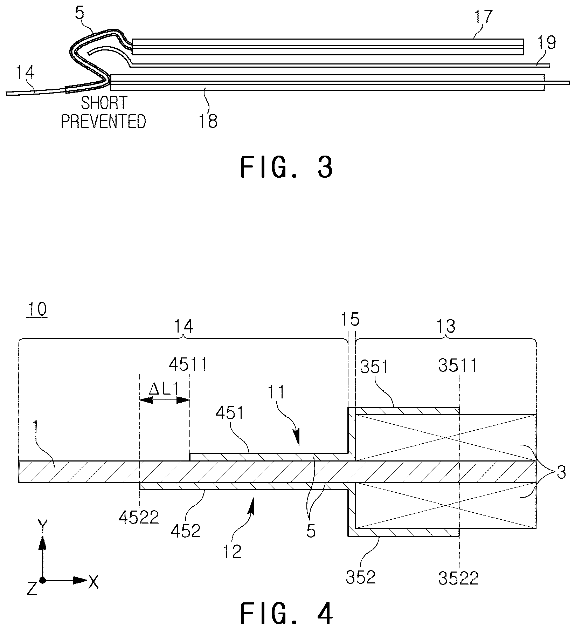

FIG. 3 is a diagram illustrating the example in which a short may be prevented in a circumstance in which the cathode uncoated portion is in direct contact with the anode in a battery including an electrode in which an uncoated portion insulating layer is formed on an uncoated portion of the electrode as illustrated in FIG. 2. Generally, the electrode surface of the anode may be formed to be larger than that of the cathode, and the anode may protrude further than the cathode on the side surface of the electrode assembly. As illustrated in FIG. 1, even when the cathode uncoated portion approaches the side surface of the electrode current collector due to pushing of the cathode uncoated portion, when an insulating layer is formed on the cathode uncoated portion, as illustrated in FIG. 3, the electrical contact between the anode and the cathode may be blocked, and accordingly, a short may be prevented.

The uncoated portion insulating layer formed on the uncoated portion may be formed on the entire region of the uncoated portion, and may be formed on a portion of the uncoated portion. When the uncoated portion insulating layer is formed on a partial region of the uncoated portion, as illustrated in FIG. 2, the uncoated portion insulating layer may be partially formed on the uncoated portion of the adjacent region from the boundary 15 between the uncoated portion and the active portion.

In the uncoated portion insulating layer, in the first uncoated portion insulating layer 451 formed on the uncoated portion of the first surface 11 and the second uncoated portion insulating layer 452 formed on the uncoated portion of the second surface 12, positions of an end 4511 of the first uncoated portion insulating layer and an end 4522 of the second uncoated portion insulating layer may be the same or different.

The end of the uncoated portion insulating layer may be the end of the insulating layer positioned on the uncoated portion and may be positioned on the uncoated portion side from the boundary between the uncoated portion and the active portion. For example, the position of the end of the uncoated portion insulating layer may be the same as the end of the uncoated portion insulating layer as illustrated in FIG. 2, and may be different from the position of the end of the uncoated portion insulating layer. Specifically, the end 4511 of the first uncoated portion insulating layer may be positioned further from the boundary 15 between the uncoated portion and the active portion than the end 4522 of the second uncoated portion insulating layer, and as illustrated in FIG. 4, the end 4522 of the second uncoated portion insulating layer may be positioned further from the boundary 15 between the uncoated portion and the active portion than the end 4511 of the first uncoated portion insulating layer.

In this case, the distance, ΔL1, between the end of the first uncoated portion insulating layer and the end of the second uncoated portion insulating layer is not limited to any particular example, and may be 0.5 mm or less.

A length from the boundary between the active portion and the uncoated portion to the end 4511 of the first uncoated portion insulating layer (that is, the length of the first uncoated portion insulating layer) and a length from the boundary between the active portion and the uncoated portion to the end 4522 of the second uncoated portion insulating layer (that is, the length of the second uncoated portion insulating layer) are not limited to any particular example, and as an example, each of the lengths may be 1 to 12 mm, and more specifically, may be 3 to 10 mm or 5 to 7 mm independently.

The insulating layer may overlap a partial region of the electrode active material layer. In this case, the insulating layer may include a first uncoated portion insulating layer 451 and a second uncoated portion insulating layer 452 on the uncoated portion, and a first active portion insulating layer 351 and a second active portion insulating layer 352 on the electrode active material layer.

By forming the active portion insulating layer on the electrode active material layer, the efficiency of the coating process for forming the insulating layer may be improved. By including the active portion insulating layer on the electrode active material layer, insulating performance by the insulating layer may be improved. When the insulating layer is formed only on the uncoated portion and the insulating layer is spaced apart from the end of the electrode active material layer, wrinkles may easily be formed on the uncoated portion during the process of manufacturing an electrode while the electrode is driven by a roller, etc., and the electrode may easily be broken during the rolling process.

The active portion insulating layer may be formed in the same region on the first surface and the second surface of the electrode. Specifically, as illustrated in FIGS. 2 and 4, the position of the end 3511 of the first active portion insulating layer and the position of the end 3522 of the second active portion insulating layer may be the same. The end of the active portion insulating layer may be the end of the insulating layer positioned on the active portion, and may be positioned on the active portion side from the boundary between the uncoated portion and the active portion.

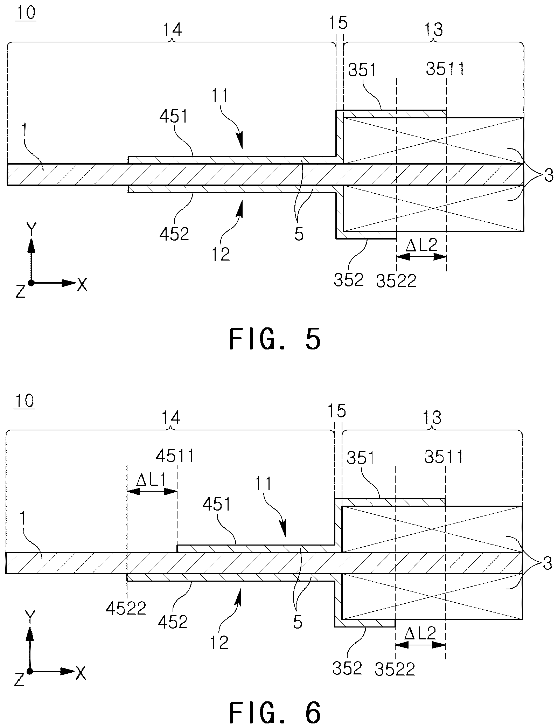

As an electrode according to an example embodiment, the active portion insulating layer may be formed in different regions on the first surface and the second surface of the electrode. As an example embodiment, as illustrated in FIGS. 5 and 6, the positions of the end 3511 of the first active portion insulating layer and the end 3522 of the second active portion insulating layer may be different from each other.

In example embodiments, when rolling an electrode in which the insulating layer and the electrode active material layer overlap each other, the insulating layer and the electrode active material layer may have a difference in physical properties such as elongation. In some cases, due to such a difference in physical properties, stress may be concentrated at the boundary between the uncoated portion and the active portion during the rolling process while the electrode is manufactured, thereby causing electrode fracture.

For example, an active portion may be formed by applying an electrode mixture slurry including an electrode active material to a portion of a current collector, an insulating layer may be formed by applying an insulating liquid overlapping with a portion of the uncoated portion and the active portion, and by goring through a drying and rolling process, an electrode including an insulating layer may be manufactured. In this case, the active portion insulating layer region in which the insulating layer and the active portion overlap each other may have a thickness greater than those of the adjacent uncoated portion insulating layer and the adjacent electrode active material layer (that is, the electrode active material layer on which the insulating layer is not formed), such that a valley may be formed between the active portion insulating layer and the adjacent region (e.g., the electrode active material layer on which the insulating layer is not formed). In example embodiments, the thickness may indicate a width from the first surface or the second surface of the electrode current collector 1 to the electrode surface on the first surface or the second surface.

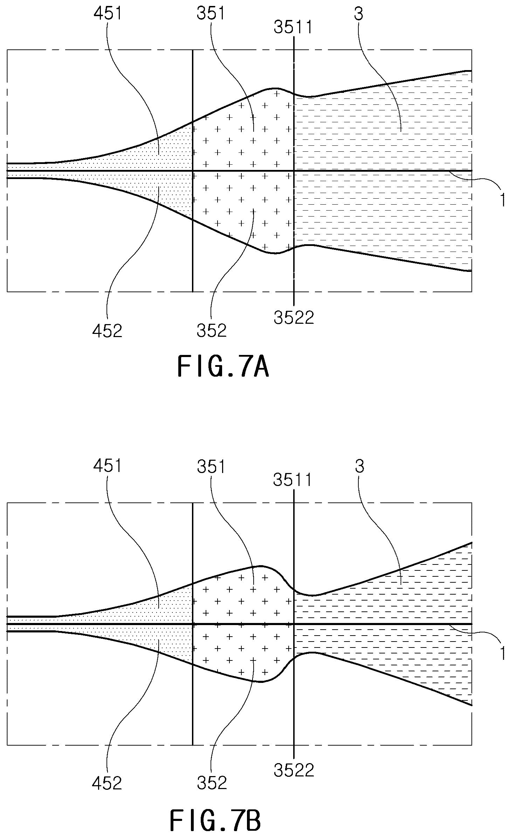

For example, the thickness distribution of the electrode in the active portion insulating layer and the adjacent uncoated portion insulating layer and the adjacent electrode active material layer is illustrated in FIG. 7. FIG. 7A illustrates a cross-sectional surface of an electrode to which an insulating liquid is applied after coating an electrode mixture slurry, and FIG. 7B illustrates a cross-sectional surface of an electrode manufactured by drying and rolling.

As illustrated in FIG. 7A, a fine valley may be formed in vicinity of the end 3511 of the first active portion insulating layer and the end 3522 of the second active portion insulating layer in the coating layer of the electrode mixture slurry (or the electrode active material layer 3) adjacent to the first active portion insulating layer 351 and the second active portion insulating layer 352 which are the regions in which the coating layer of the electrode mixture slurry and the coating layer of the insulating liquid overlap each other, and as illustrated in FIG. 7B, the formation of the valley may become more prominent after the drying and rolling process is performed. In FIGS. 7A and 7B, in the region in which the first active portion insulating layer 351 and the second active portion insulating layer 352, the coating layer of the electrode mixture slurry and the coating layer of the insulating liquid may overlap each other, but the coating layers are indicated as an integrated region without being distinguished from each other. The valley may be formed at the end of each active portion insulating layer, and in the portion in which the valley is formed, an insulating layer and an electrode active material layer having different elongations may be positioned with the valley as a boundary. Accordingly, when exposed to harsh conditions such as rolling during the electrode manufacturing process or concentrating and welding a plurality of uncoated portions of the electrode to manufacture an electrode tab, the portion in which the valley is formed may act as a vulnerable portion in which forces such as pressure may be concentrated, and consequently, electrode fracture may occur.

According to an example embodiment, when the insulating layer is formed, the positions of the valleys formed on the first surface and the second surface of the electrode may be misaligned to each other, thereby preventing or reducing the issue of electrode fracture occurring in the region in which the valley is formed. Specifically, the positions of the end of the first active portion insulating layer and the end of the second active portion insulating layer of the electrode may be different from each other.

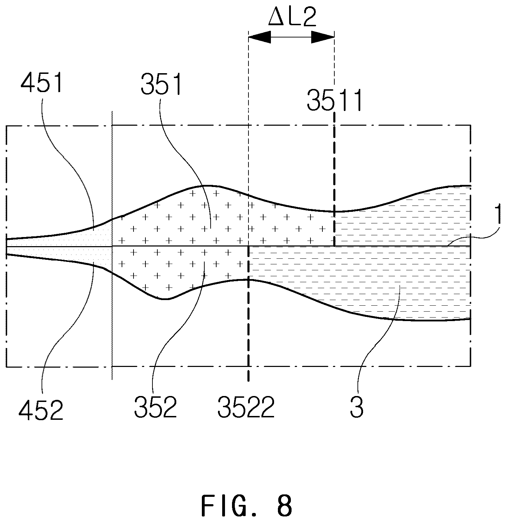

For example, in FIG. 8, the thickness distribution of the electrode in the active portion insulating layer and the uncoated portion insulating layer and the electrode active material layer adjacent thereto is illustrated, and the positions of the ends of the active portion insulating layer are different on the first surface and the second surface of the electrode. In FIG. 8, in the region in which the first active portion insulating layer 351 and the second active portion insulating layer 352 are formed, the coating layer of the electrode mixture slurry and the coating layer of the insulating liquid may overlap each other, but the coating layers may not be distinct from each other and is indicated as an integrated region.

As illustrated in FIG. 8, a fine valley may be formed in the region indicated by the dotted line between the region in which the coating layer of the electrode mixture slurry and the coating layer of the insulating liquid overlap each other and the coating layer of the adjacent electrode mixture slurry, that is, the region in which the end of the active portion insulating layer is present, such that a deep valley may be formed in the electrode after rolling, but the valleys may be formed at different positions on the first surface and the second surface. In this case, the thickness may decrease from the thickest portion of the region in which the active portion insulating layer is formed toward the end of the active portion insulating layer, and the thickness may increase from the end of the active portion insulating layer toward the electrode active material layer on which the insulating layer is not formed, such that a valley may be formed in the region in which the end of the active portion insulating layer is present, and the valley may have different positions on the first surface and the second surface. Specifically, the region in which the end of the first active portion insulating layer is present and the region in which the end of the second active portion insulating layer is present may include valleys independently formed, and positions of the valleys may be different on the first surface and the second surface.

According to an example embodiment, the positions of the end of the first active portion insulating layer and the end of the second active portion insulating layer may be different. Since the ends of the active portion insulating layers of the first surface and the second surface of the electrode are present at different positions and have a distance therebetween, the valleys of the first surface and the second surface may be present at different positions. Accordingly, since the vulnerable portion of the electrode is dispersed, the force applied to the electrode when rolling or manufacturing the electrode tab by welding may be dispersed, and even when the electrode is exposed to harsh conditions, the fracture of the electrode at the position at which the valley is formed may be prevented or suppressed.

In an example embodiment, the electrode in an example embodiment may have a distance, ΔL2, between the end of the first active portion insulating layer and the end of the second active portion insulating layer of 0.2 mm or more to 0.9 mm or less, 0.3 mm or more to 0.8 mm or less, or 0.4 mm or more to 0.7 mm or less. More specifically, the distance may be 0.2 mm or more, 0.3 mm or more, 0.4 mm or more, or 0.5 mm or more, and 0.9 mm or less, 0.8 mm or less, or 0.7 mm or less.

In an example embodiment, the electrode has first and second active portion insulating layers with a length of the first active portion insulating layer from the boundary 15 to the end of the first active portion insulating layer and a length of the second active portion insulating layer from the boundary 15 to the end of the second active portion insulating layer, and is not limited to any particular example as long as the difference between the two lengths satisfies the distance, ΔL2, as described above.

In an example embodiment, in the electrode, the length of the first active portion insulating layer, the length from the boundary 15 between the first active portion and the first uncoated portion to the end of the first active portion insulating layer, and the length of the second active portion insulating layer, the length from the boundary 15 between the second active portion and the second uncoated portion to the end of the second active portion insulating layer, may be different from each other. The positions of the boundary 15 may not match on the first surface and the second surface of the electrode, and in this case, a reference for measuring the length of the active portion insulating layer may be a boundary which forms a shorter length among the boundary of the first surface (first boundary) and the boundary of the second surface (second boundary). For example, when the positions of the first boundary and the second boundary are different, when the relationship between the distance D1 from the first boundary to the end of the first active portion insulating layer and the distance D2 from the second boundary to the end of the first active portion insulating layer is D1>D2, the length of each active portion insulating layer may be measured based on the second boundary.

As an example embodiment, when the length of the first active portion insulating layer is longer than that of the second active portion insulating layer, the length of the first active portion insulating layer may be 1.3 or more times to 9 or fewer times than that of the second active portion insulating layer, for example, 1.5 or more times to 7.5 or fewer times, or 2 or more times to 9 or fewer times. As an example, the first active portion insulating layer may be formed to be 1.0 mm, and the second active portion insulating layer may be formed to be 0.5 mm. As another example embodiment, the first active portion insulating layer may be formed to be 0.9 mm, and the second active portion insulating layer may be formed to be 0.1 mm. By forming the positions of the ends of the first and second active portion insulating layers to mismatch as described above, the pressure applied to the electrode in a rolling process, a welding process, or the like may be dispersed, and accordingly, the fracture of the electrode may be prevented.

As an example embodiment, each of the length of the first active portion insulating layer and the length of the second active portion insulating layer may be 0.1 mm or more, 0.3 mm or more, or 0.5 mm or more, and 1.2 mm or less, 1 mm or less, or 0.9 mm or less, independently. Specifically, each of the first active portion insulating layer and the second active portion insulating layer may have a length of 0.1 mm or more to 1.2 mm or less independently. More specifically, the length of the first active portion insulating layer may be 0.3 to 1.2 mm, and the length of the second active portion insulating layer may be 0.1 to 1.0 mm.

The active portion insulating layer may have a convex mountain-shaped side ring defect at the end of the overlap portion due to interaction between the insulating liquid and the electrode mixture slurry, and such side ring may cause a concentration of pressure during the rolling process, and thus may cause electrode fracture.

The insulating layer formed on the uncoated portion and the active portion is not limited to any particular example, and may have a thickness of 3 µm or more. When the thickness of the insulating layer is relatively small, insulating properties may be insufficient. An upper limit of the thickness of the insulating layer is not limited to any particular example as long as performance of the electrode is not deteriorated. For example, the insulating layer may have a thickness of 40 µm or less. Specifically, each of the first active portion insulating layer, the first uncoated portion insulating layer, the second active portion insulating layer, and the second uncoated portion insulating layer may have a thickness of 3 to 40 µm independently.

The insulating layer may be manufactured from an insulating material, and the insulating material is not limited to any particular example, and may include fluorine resin, polyimide-based resin, acrylic resin such as polymethyl acrylate (PMA), polymethyl methacrylate (PMMA), polyvinyl acetate, polyamide (PA), polyvinyl chloride (PVC), polyether nitrile (PEN), polyethylene (PE), polypropylene (PP), polyacrylonitrile (PAN), acrylonitrile butadiene rubber, styrene butadiene rubber (SBR), poly(meth)acrylic acid, carboxymethyl cellulose (CMC), hydroxyethyl cellulose, polyvinyl alcohol, etc. The insulating material may be used alone or in combination of two or more. Also, carboxymethyl cellulose may be used in a salt form such as a sodium salt, or the like.

The insulating layer may be formed by applying an electrode mixture slurry including an electrode active material to an electrode current collector to form an active portion, applying an insulating liquid for forming the insulating layer before drying, and drying. Furthermore, the insulating layer may be rolled by being put into a rolling process together with the electrode active material layer.

The insulating liquid may be a resin included in forming the insulating layer dissolved in an organic solvent. The organic solvent may be used herein when the organic solvent is a solvent for an organic resin. As an example, the organic solvent may be N-methyl-2-pyrrolidone (NMP), cyclohexanone, or the like.

The usage amount of the organic solvent used is not limited to any particular example, and may be put in such that viscosity of the insulating liquid may be in the range of 1,000 to 9,000cp at room temperature (25°C). When viscosity of the insulating liquid is out of the range, workability may deteriorate. More specifically, an organic solvent may be added such that viscosity of the insulating liquid may be in the range of 4,000 to 7,000 cp.

The insulating liquid may be applied by a method such as gravure coating, slot die coating, multilayer simultaneous die coating, imprinting, doctor blade coating, dip coating, bar coating, or casting, but an example embodiment thereof is not limited thereto.

An electrode according to an example embodiment may be a cathode or an anode.

When the electrode is a cathode, the cathode may include a cathode current collector and a cathode active material layer disposed on both surfaces of the cathode current collector.

The cathode current collector may include stainless steel, nickel, aluminum, titanium, or an alloy thereof. The anode current collector may include aluminum surface-treated with carbon, nickel, titanium and silver, or stainless steel surface-treated with carbon, nickel, titanium and silver. Also, the cathode current collector may be a polymer substrate coated with a conductive metal such as nickel, aluminum, titanium and silver.

The cathode current collector may have various forms, such as, but not limited thereto, a foil, a foam, a net, a porous body, a non-woven body, or the like. Also, the cathode current collector may have a thickness of, but not limited thereto, 10 to 50 µm.

The cathode active material layer may include a cathode active material. The cathode active material may include a compound for reversibly intercalating and deintercalating lithium ions.

According to example embodiments, the cathode active material may include a lithium-nickel metal oxide. The lithium-nickel metal oxide may further include at least one of cobalt (Co), manganese (Mn) and aluminum (Al).

In some example embodiments, the cathode active material or the lithium-nickel metal oxide may include a layered structure or a crystal structure represented by chemical formula 1 as below.

[Chemical formula 1] LiₓNiₐM_{b}O_{2+z}

In chemical formula 1, 0.9≤0≤x≤1.2, 0.6≤ₐ≤0.99, 0.01≤b≤0.4, -0.5≤z≤0.1 may be satisfied. As described above, M may include Co, Mn and/or Al.

The chemical structure represented by chemical formula 1 may represent a bonding relationship included in the layered structure or crystal structure of the cathode active material, and may not exclude other additional elements. For example, M may include Co and/or Mn, and Co and/or Mn may be provided as a main active element of the cathode active material together with Ni. Chemical formula 1 may be provided to represent the bonding relationship of the main active elements, and may be understood as encompassing introduction and substitution of additional elements.

In an example embodiment, the cathode active material may further include an auxiliary element to enhance chemical stability of the cathode active material or the layered structure/crystal structure. The auxiliary element may be incorporated into the layered structure/crystal structure and may form a bond, and also in this case, the element may be understood to be included in the chemical structure range represented by chemical formula 1.

The auxiliary element may include at least one of, for example, Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also function as an auxiliary active element contributing to capacity/output activity of the cathode active material together with Co or Mn, for example, Al.

For example, the cathode active material or the lithium-nickel metal oxide may include a layered structure or a crystal structure represented by chemical formula 1-1.

[Chemical formula 1-1] LiₓNiₐM1_{b1}M2_{b2}O_{2+z}

In chemical formula 1-1, M1 may include Co, Mn, and/or Al. M2 may include the auxiliary element described above. In chemical formula 1-1, 0.9≤x≤1.2, 0.6≤a≤0.99, 0.01≤b1+b2≤0.4, -0.5≤z≤0.1 may be satisfied.

The cathode active material may further include a coating element or a doping element. For example, elements substantially the same or similar to the auxiliary elements described above may be used as the coating element or the doping element. For example, the elements described above may be used alone or in combination of two or more thereof as the coating element or the doping element.

The coating element or the doping element may be present on the surface of the lithium-nickel metal oxide particle, or may penetrate through the surface of the lithium-nickel metal oxide particle and may be included in the bonding structure represented by chemical formula 1 or chemical formula 1-1.

The cathode active material may include a nickel-cobalt-manganese (NCM) lithium oxide. In this case, an NCM lithium oxide having an increased content of nickel may be used.

Ni may be provided as a transition metal related to output and capacity of the lithium secondary battery. Accordingly, by employing a high-content (High-Ni) composition in the cathode active material as described above, a high-capacity cathode and a high-capacity lithium secondary battery may be provided.

However, as the Ni content increases, the long-term storage stability and lifespan stability of the cathode or the secondary battery may be relatively deteriorated, and side reactions with the electrolyte may also increase. However, according to example embodiments, by including Co, electrical conductivity may be maintained, and lifespan stability and capacity retention properties through Mn may be improved.

The content of Ni (e.g., a mole fraction of nickel in the total number of moles of nickel, cobalt and manganese) in the NCM-based lithium oxide may be 0.6 or more, 0.7 or more, or 0.8 or more. In some example embodiments, the content of Ni may be 0.8 to 0.95, 0.82 to 0.95, 0.83 to 0.95, 0.84 to 0.95, 0.85 to 0.95, or 0.88 to 0.95.

In some example embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

In some example embodiments, the cathode active material may include, for example, a Mn-rich-based active material having a chemical structure or crystal structure represented by chemical formula 2, a lithium rich layered oxide (LLO)/overlithiated oxide (OLO)-based active material, or a cobalt-less-based active material.

[Chemical formula 2] p[Li₂MnO₃]·(1-p)[Li_{q}JO₂]

In chemical formula 2, 0<p<1, 0.9≤q≤1.2, and J may include at least one element among Mn, Ni, Co, Fe, Cr, V, Cu, Zn, Ti, Al, Mg and B.

The cathode may be prepared by a cathode slurry formed by mixing the cathode active material in a solvent, for example. After coating the cathode slurry on a cathode current collector, drying may be performed, the insulating liquid may be coated before or after the drying, and rolling may be performed, thereby preparing a cathode active material layer.

The cathode may be a multilayer cathode. In the case of a multilayer cathode, for example, a first cathode mixture layer may be formed by coating the first cathode mixture slurry on a cathode current collector, a second cathode mixture layer may be formed by applying the second cathode mixture slurry on the first cathode mixture layer, and thereafter, the insulating liquid may be coated. The first cathode mixture slurry and the second cathode mixture slurry may be dried simultaneously, and the second cathode mixture slurry may be applied and dried after the first cathode mixture slurry is dried.

The coating process may be performed by methods such as gravure coating, slot die coating, multilayer simultaneous die coating, imprinting, doctor blade coating, dip coating, bar coating, or casting, but an example embodiment thereof is not limited thereto.

The cathode active material layer may further include a binder, and may optionally further include a conductive material, a thickener, or the like.

The solvent used in the manufacturing of the cathode slurry may include, but is not limited to, N-methyl-2-pyrrolidone (NMP), dimethylformamide, dimethylacetamide, N,N-dimethylaminopropylamine, ethylene oxide, tetrahydrofuran, or the like.

The binder may include polyvinylidene fluoride (PVDF), poly(vinylidene fluoride-co-hexafluoropropylene) copolymer, polyacrylonitrile, polymethylmethacrylate, acrylonitrile butadiene rubber (NBR), polybutadiene rubber (BR), styrene-butadiene rubber (SBR), or the like. In an example embodiment, a PVDF-based binder may be used as a cathode binder.

The conductive material may be added to enhance conductivity of the cathode active material layer and/or mobility of lithium ions or electrons. For example, the conductive material may include a carbon-based conductive material such as graphite, carbon black, acetylene black, Ketjen black, graphene, carbon nanotubes, vapor-grown carbon fibers (VGCFs), carbon fibers, and/or a metal-based conductive material including tin, tin oxide, titanium oxide, a perovskite material such as LaSrCoO₃, LaSrMnO₃, and the like, but an example embodiment thereof is not limited thereto.

If desired, the cathode mixture may further include a thickener and/or a dispersant. As an example embodiment, the cathode mixture may include a thickener such as carboxymethyl cellulose (CMC).

When the electrode is an anode, the anode may include an anode current collector and an anode active material layer disposed on both surfaces of the anode current collector.

The anode current collector may include stainless steel, copper, nickel, titanium, or an alloy thereof. The anode current collector may include copper surface-treated with carbon, nickel, titanium, and silver, or stainless steel surface-treated with carbon, nickel, titanium, and silver. Also, the anode current collector may be a polymer substrate coated with a conductive metal such as nickel, aluminum, titanium, or silver.

The anode current collector may have various forms, such as non-limiting examples such as foil, foam, net, porous body, and non-woven body. Also, the anode current collector may have a thickness of 10 to 50 µm, but is not limited thereto.

The anode active material layer may include an anode active material. A material for adsorbing and desorbing lithium ions may be used as the anode active material. For example, the anode active material may be a carbon-based material such as crystalline carbon, amorphous carbon, carbon composite, or carbon fiber; lithium metal; lithium alloy; silicon (Si)-containing material, tin (Sn)-containing material, or the like.

Examples of the amorphous carbon may include hard carbon, soft carbon, coke, mesocarbon microbead (MCMB), mesophase pitch-based carbon fiber (MPCF), etc.

Examples of the crystalline carbon may include graphite-based carbon such as natural graphite, artificial graphite, graphitized coke, graphitized MCMB, and graphitized MPCF.

The lithium metal may include pure lithium metal or lithium metal having a protective layer formed for suppressing dendrite growth. In an example embodiment, a lithium metal-containing layer deposited or coated on an anode current collector may be used as the anode active material layer. In an example embodiment, a lithium thin film layer may be used as the anode active material layer.

The lithium alloy may include elements such as aluminum, zinc, bismuth, cadmium, antimony, silicon, lead, tin, gallium, or indium.

The silicon-containing material may provide increased capacity properties. The silicon-containing material may include Si, SiOₓ(0<x<2), metal doped SiOₓ(0<x<2), silicon-carbon composites, or the like. The metal may include lithium and/or magnesium, and the metal doped SiOₓ(0<x<2) may include metal silicate.

For example, the anode slurry may be prepared by mixing the anode active material in a solvent. The anode active material layer may further include a binder and may optionally further include a conductive material, a thickener, or the like.

The anode slurry may be coated/deposited on the anode current collector, and may be dried and rolled, thereby manufacturing the anode active material layer. The coating process may be performed by a method such as gravure coating, slot die coating, multilayer simultaneous die coating, imprinting, doctor blade coating, dip coating, bar coating, or casting, but an example embodiment thereof is not limited thereto.

In some example embodiments, the anode may include a lithium metal type anode active material layer formed through a deposition/coating process.

The anode may be a multilayer anode. In the case of a multilayer anode, for example, a first anode mixture layer may be formed by applying the first anode mixture slurry on an anode current collector, a second anode mixture layer may be formed by applying the second anode mixture slurry on the first anode mixture layer, and the insulating liquid may be coated. The first anode mixture slurry and the second anode mixture slurry may be dried simultaneously, or the second anode mixture slurry may be applied and dried after the first anode mixture slurry is dried.

The examples of the solvent for the anode mixture may include, not limited thereto, water, pure water, deionized water, distilled water, ethanol, isopropanol, methanol, acetone, n-propanol, or t-butanol, etc.

The binder may include polyvinylidene fluoride (PVDF), poly(vinylidene fluoride-co-hexafluoropropylene) copolymer, polyacrylonitrile, polymethylmethacrylate, acrylonitrile butadiene rubber (NBR), polybutadiene rubber (BR), or styrene-butadiene rubber (SBR), etc. In an example embodiment, a styrene-butadiene rubber (SBR)-based binder, a carboxymethyl cellulose (CMC), a polyacrylic acid-based binder, a poly 3,4-ethylenedioxythiophene (PEDOT)-based binder, or the like may be used as the anode binder.

The binder may be included by about 1.5 to about 5 weight % based on the total weight of the anode active material layer.

The conductive material may be added to enhance conductivity of the cathode active material layer and/or mobility of lithium ions or electrons. For example, the conductive material may include a carbon-based conductive material such as graphite, carbon black, acetylene black, Ketjen black, graphene, carbon nanotubes, vapor-grown carbon fibers (VGCFs), carbon fibers, and/or a metal-based conductive material including tin, tin oxide, titanium oxide, a perovskite material such as LaSrCoO₃, or LaSrMnO₃, and the like, but an example embodiment thereof is not limited thereto.

In an example embodiment, the conductive material may be included by about 0.05 to about 0.2 weight % based on the total weight of the anode active material layer.

If desired, the anode active material layer may further include a thickener and/or a dispersant, etc. In an example embodiment, the anode active material layer may include a thickener such as carboxymethyl cellulose (CMC).

An electrode assembly may be manufactured by alternately stacking the anode and the cathode and disposing a separator between the anode and the cathode.

The separator may be configured to prevent an electrical short between the anode and the cathode and to allow ion flow. As an example embodiment, the thickness of the separator is not limited thereto, but may be, for example, 10 µm to 20 µm.

For example, the separator may include a porous polymer film or a porous nonwoven fabric. The porous polymer film may include a polyolefin polymer such as an ethylene polymer, a propylene polymer, an ethylene/butene copolymer, an ethylene/hexene copolymer, and an ethylene/methacrylate copolymer. The porous nonwoven fabric may include high-melting point glass fiber, polyethylene terephthalate fiber, etc. The separator may include a ceramic-based material. For example, inorganic particles may be coated on the polymer film or may be dispersed in the polymer film, thereby improving heat resistance.

The separator may have a single-layer or multilayer structure including the above-described polymer film and/or nonwoven fabric.

The electrode assembly may be, for example, a winding-type electrode assembly, a stacking-type electrode assembly, or a stack-folding-type electrode assembly.

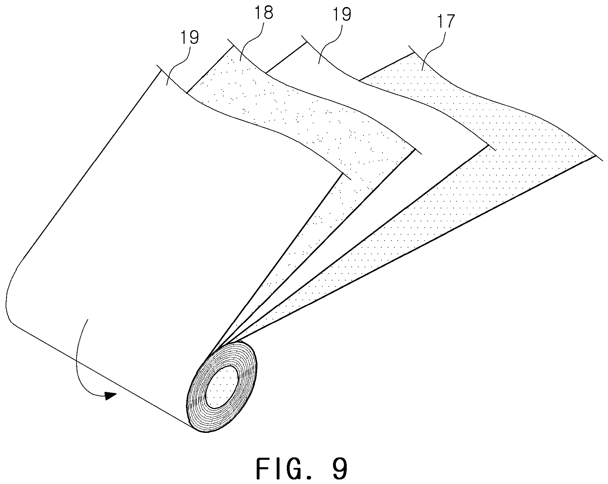

In example embodiments, the electrode assembly may be a winding-type electrode assembly. A process of manufacturing the winding-type electrode assembly is illustrated in FIG. 9. As illustrated in FIG. 9, the winding-type electrode assembly may be manufactured by, for example, stacking an anode 18 elongated in one direction and a cathode 17 elongated in one direction, disposing and stacking a separator 19 elongated in one direction between the anode and the cathode, and on one surface of the anode or the cathode, and performing winding in one direction.

As the electrode elongated in one direction and used in the winding-type electrode assembly, the electrode according to an example embodiment described above may be used. Accordingly, the electrode may include an active portion in which an electrode active material layer is formed on both surfaces of an electrode current collector, and may include an uncoated portion at one end portion in the one direction, and also, the electrode elongated in the one direction may include an active portion insulating layer and an uncoated portion insulating layer in a region in vicinity of the boundary between the active portion and the uncoated portion. Also, positions of the end of the first active portion insulating layer of the first surface and the end of the second active portion insulating layer of the second surface may be different.

The electrode elongated in the one direction may include an active portion insulating layer, an uncoated portion insulating layer, and an uncoated portion at one end portion including the uncoated portion, and may have a step difference in the one direction. Further, although not illustrated in the diagram, the uncoated portion may be formed at both end portions of the electrode.

In the electrode elongated in one direction and used in the winding-type electrode assembly, the one direction may be a winding direction or a step difference direction. Here, the step difference direction may be a direction from the central portion of the electrode toward the step difference formed in the electrode, and the step difference may be formed by forming an active portion insulating layer, an uncoated portion insulating layer and an uncoated portion on one end portion of the electrode. Also, the step difference direction may refer to the opposite direction with respect to the winding direction.

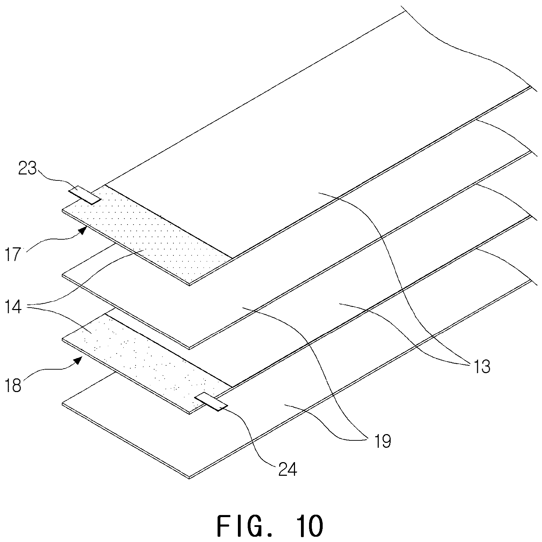

An example of the electrode stack in which the electrode and the separator elongated in one direction are stacked, used in manufacturing of the winding-type electrode assembly, is illustrated in FIG. 10. Also, as illustrated in FIG. 10, electrode leads 23 and 24 may be bonded to the electrode elongated in the one direction by a method such as ultrasonic welding or laser welding in a direction perpendicular to the one direction (winding direction or step difference direction). Also, as an example, in the winding-type electrode assembly, the anode lead 24 and the cathode lead 23 may be bonded in opposite directions.

In example embodiments, the electrode assembly may be a stack-type electrode assembly. An example of the stack-type electrode assembly and the process of manufacturing the same is illustrated in FIG. 11. The stack-type electrode assembly may be manufactured, for example, by providing a plurality of anodes, a plurality of cathodes and a plurality of separators having predetermined sizes as illustrated in FIG. 11A, alternately stacking a plurality of anodes 18 and a plurality of cathodes 17 and inserting a separator 19 between the anodes and the cathodes as illustrated in FIG. 11B, and accordingly, the manufactured stack-type electrode assembly may include a stacking order such as cathode/separator/anode/separator as illustrated in FIG. 11C.

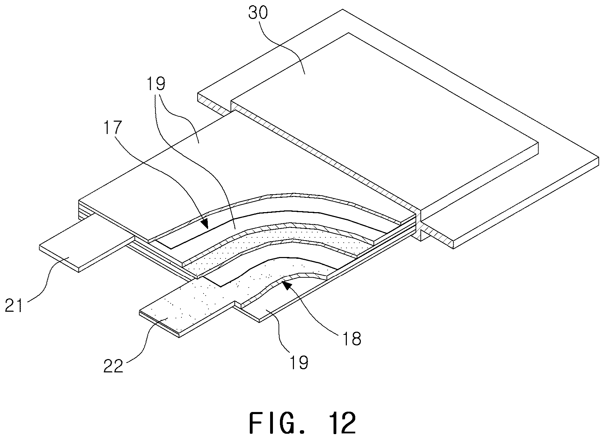

A secondary battery including the stack-type electrode assembly is illustrated in FIG. 12. The secondary battery illustrated in FIG. 12 may be obtained by housing the stack-type electrode assembly illustrated in FIG. 11 in a battery case 30 such as a pouch case and sealing.

As illustrated in FIG. 12, the secondary battery obtained may have the same planar shape as the planar shape of the stack-type electrode assembly housed in the battery case, and may also have the same planar shape as the planar shape of the electrode used to manufacture the stack-type electrode assembly.

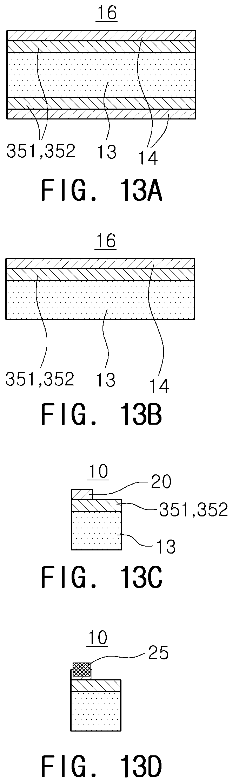

The process of manufacturing an electrode used to manufacture the stack-type electrode assembly and the electrode obtained thereby are illustrated in FIG. 13. Although not specifically limited, the electrode used to form the stack-type electrode assembly may be manufactured by a process (FIG. 13A) of forming an electrode plate 16 elongated in one direction by forming an active portion and an uncoated portion by coating slurry on one surface or both surfaces of an electrode current collector, and performing drying and rolling, a slitting process (FIG. 13B) of cutting the electrode plate 16 to have the same length and shape as a battery to be obtained, and processes (FIGS. 13C and 13D) of notching the electrode plate 16 to have a width of the battery, to have an electrode tab 20 and to have an electrode lead 25, thereby manufacturing an electrode having a shape the same as or similar to that of the plane of the battery.

In the electrode, the length may be represented based on the direction in which the electrode tab is formed, and the width may be represented based on the direction perpendicular to the direction in which the electrode tab is formed.

The electrode having a planar shape of the battery, used in the stack-type electrode assembly, may be the electrode according to an example embodiment described above. Accordingly, the electrode may include an active portion in which an electrode active material layer is formed on both surfaces of an electrode current collector, and may include an uncoated portion on one side end portion of the electrode, and the uncoated portion may be a portion of an electrode tab. For example, the uncoated portion may be provided as an electrode tab by two or more being focused and welded to each other. Also, the electrode may include an active portion insulating layer and an uncoated portion insulating layer in a region in vicinity of a boundary between the active portion and the uncoated portion, and also, positions of an end of the first active portion insulating layer of the first surface and an end of the second active portion insulating layer of the second surface may be different.

The electrode having a planar shape of the battery may include an active portion insulating layer, an uncoated portion insulating layer and an uncoated portion in sequence in one end portion including the uncoated portion. Accordingly, the electrode may have a step difference at one end.

In the electrode included in the stack-type electrode assembly, the electrode tab may extend in the step difference direction having the step difference, and the electrode lead may be bonded by a method such as ultrasonic welding or laser welding in the direction in which the electrode tab extends. Accordingly, in the electrode, the step difference direction and the extension direction of the electrode tab may match, and may also be the same as the extension direction of the electrode lead. In the stack-type electrode assembly, the extension direction of the electrode lead may be the same or may be opposite to each other in the anode and the cathode.

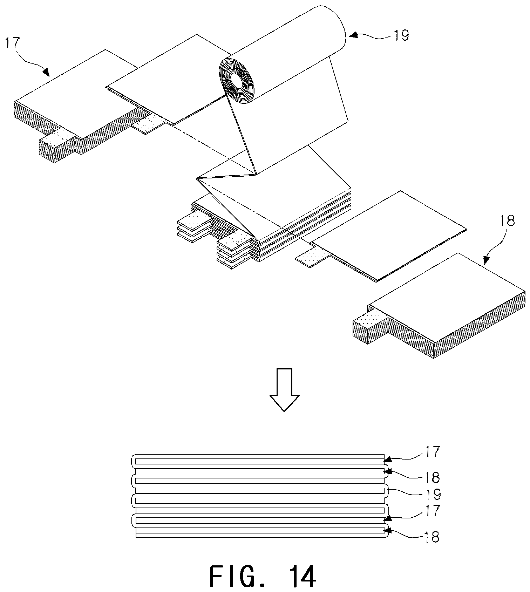

In example embodiments, the electrode assembly may be a stack-folding type electrode assembly. The stack-folding-type electrode assembly and a process of manufacturing the same are illustrated in FIG. 14. As illustrated in FIG. 14, the stack-folding-type electrode assembly may be manufactured by, for example, alternately inserting a plurality of anodes and a plurality of cathodes having predetermined sizes while folding a separator elongated in one direction in a zigzag direction, and accordingly, cross-sectional surface shape of the manufactured electrode assembly may include a stacking order such as cathode/separator/anode/separator as illustrated in FIG. 14, and the separator may be folded in a zigzag manner and may be interposed between the anode and the cathode.

The stack-folding-type electrode assembly may be housed and sealed in a battery case such as a pouch case, thereby manufacturing a secondary battery.

The secondary battery manufactured using the stack-folding-type electrode assembly may be substantially the same as the secondary battery manufactured using the stack-type electrode assembly other than the configuration in which the separator elongated in one direction is used, and the electrode used in the stack-type electrode assembly may be used.

A lithium secondary battery may be defined by including an electrolyte in a battery case together with the electrode assembly. According to an example embodiment, as the electrolyte, a non-aqueous electrolyte may be used.

The non-aqueous electrolyte may include a lithium salt as an electrolyte and an organic solvent, and the lithium salt may be represented as, for example, Li⁺X⁻, and the anion (X⁻) of the lithium salt may include F⁻, Cl⁻, Br, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻ and the like.

The organic solvent may include an organic compound having sufficient solubility for the lithium salt and additives and not having reactivity in the battery. As the organic solvent, for example, at least one of a carbonate-based solvent, an ester-based solvent, an ether-based solvent, a ketone-based solvent, an alcohol-based solvent, and an aprotic solvent may be included. As an organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate, methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfur oxide, acetonitrile, diethoxyethane, sulfolane, gamma-butyrolactone, propylene sulfite, and the like may be used. These may be used alone or in combination of two or more thereof as the organic solvent.

The non-aqueous electrolyte may further include an additive. The additive may include, for example, a cyclic carbonate-based compound, fluorine-substituted carbonate-based compound, sultone-based compound, cyclic sulfate-based compound, cyclic sulfite-based compound, phosphate-based compound and borate-based compound.

The cyclic carbonate-based compound may include vinylene carbonate (VC), vinyl ethylene carbonate (VEC), or the like.

The fluorine-substituted carbonate-based compound may include fluoroethylene carbonate (FEC), or the like.

The sultone-based compound may include 1,3-propane sultone, 1,3-propene sultone, 1,4-butane sultone, or the like.

The cyclic sulfate-based compound may include 1,2-ethylene sulfate, 1,2-propylene sulfate, or the like.

The cyclic sulfite-based compound may include ethylene sulfite, butylene sulfite, or the like.

The phosphate-based compound may include lithium difluoro bis-oxalato phosphate, lithium difluoro phosphate, or the like.

The borate-based compound may include lithium bis(oxalate) borate, or the like.

As an example embodiment, the electrode may have an electrode tab including a first uncoated portion or a second uncoated portion.

As an example embodiment, the electrode may be a cathode or an anode.

In an example embodiment, the secondary battery may include at least one anode and at least one cathode, and the anode, the cathode, or a combination thereof may be the electrode in the example embodiment.

In the secondary battery, for example, electrode tabs (an anode tab 22 and cathode tab 21) may protrude from an anode current collector and a cathode current collector, respectively, and may extend to a side portion of a battery case. For example, the battery case may be a pouch-type case, a square-type case, a cylindrical-type case, a coin-type case, or the like. The electrode tabs may extend or may be exposed outwardly from, for example, the one side portion of the battery case and may be connected to electrode leads (anode lead and cathode lead). When the battery case is a pouch-type case, the electrode tabs extending outwardly from the one side portion of the battery case may be fused together with the battery case.

### Embodiment

Hereinafter, embodiments may be further described by referring to specific experimental examples. The embodiment and the comparative examples included in the experimental examples are merely examples of the present disclosure and do not limit the accompanied claims. It will be apparent to those skilled in the art that various changes and modifications may be made to the embodiments in the scope and technical idea of the present disclosure, and it is also natural that such changes and modifications fall in the scope of the appended claims.

### Embodiment 1

A cathode mixture slurry including 96 weight% of cathode active material of NCM 622, 1.5 weight% of carbon black conductive material, and 2.5 weight% of PVDF (polyvinylidene fluoride) binder was applied to the active portion on both surfaces of aluminum foil (thickness: 12 µm) divided into an active portion and an uncoated portion, thereby forming a cathode active material layer, and the length of the uncoated portion in which the slurry was not coated was 15 mm.

An uncoated portion insulating layer was formed by applying an insulating liquid by 5 mm from the boundary between the active portion and the uncoated portion to the uncoated portion side using an insulating liquid including polyimide (PI) dissolved in NMP on both surfaces of the cathode.

Also, the insulating liquid was applied from the boundary between the uncoated portion and the active portion to overlap with the cathode mixture slurry on the active portion side. In this case, the first surface of the cathode was coated so as to overlap the active portion by 1 mm, and the second surface was coated so as to overlap by 0.5 mm, thereby forming the first and second active portion insulating layers such that the distance ΔL2 between the end of the first active portion insulating layer and the end of the second active portion insulating layer became 0.5 mm.

Thereafter, the cathode mixture slurry and the insulating liquid were dried, and rolled at a pressure of 3.6 g/cm³ of cathode density, thereby manufacturing the cathode.

Using a resistance meter (measurement range: 0.1 MS2 to 5,000 MΩ) for the manufactured cathode, a voltage was applied between the uncoated portion and the uncoated portion insulating layer, between the uncoated portion insulating layer and the cathode active material layer, and between the uncoated portion and the cathode active material layer for 0.5 s, and resistance between the two points was measured, respectively.

The resistance value (5,000 MS2) at the maximum measurement limit of the resistance meter was measured between the uncoated portion and the uncoated portion insulating layer and between the uncoated portion insulating layer and the cathode active material layer. The resistance value of 0.1 MΩ was measured between the uncoated portion and the cathode active material layer.

According to the results, it is indicated that the uncoated portion insulating layer acted as a resistor between the uncoated portion and the cathode active material layer, and that even when the anode and cathode were in direct contact with each other, the insulating layer may electrically block the contact, thereby preventing a short.

Five samples were obtained by cutting the obtained cathode to include both the uncoated portion and the active portion.

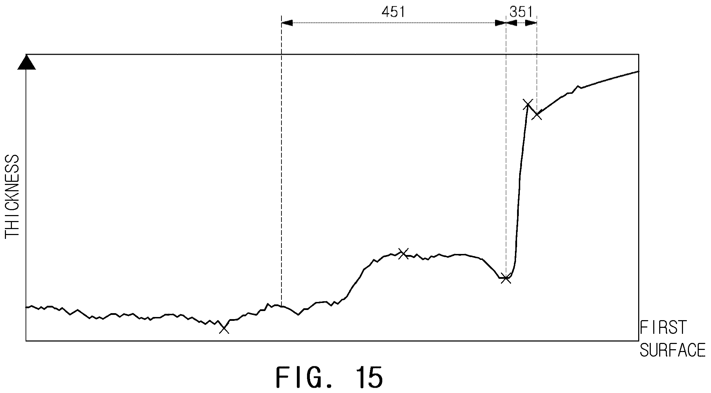

The thickness profile of the first surface of one of the samples was analyzed using a 3-Dimensional(3D) microscope, and the results are indicated in FIG. 15. As illustrated in FIG. 15, a valley was formed at the end of the active portion insulating layer 351. Although not illustrated, it was confirmed that the valley of the second surface of the sample was formed at a position different from that of the valley of the first surface. In this case, the valley formed on the first surface and the valley formed on the second surface were spaced apart from each other by 0.5 mm (ΔL2=0.5 mm).

Tensile strength in the Transverse Direction (TD) of the five prepared samples was measured using a universal test machine (UTM), and the average value is listed in Table 1. As for the tensile strength, the value when the sample is broken is listed in Table 1. As listed in Table 1, a high value of an average of 2,240 kgf/mm² was obtained. This may be because the end of the active portion insulating layer was formed at different positions on the first surface and the second surface, thereby dispersing the force applied to the electrode during rolling, and reducing the tensile strength degradation.

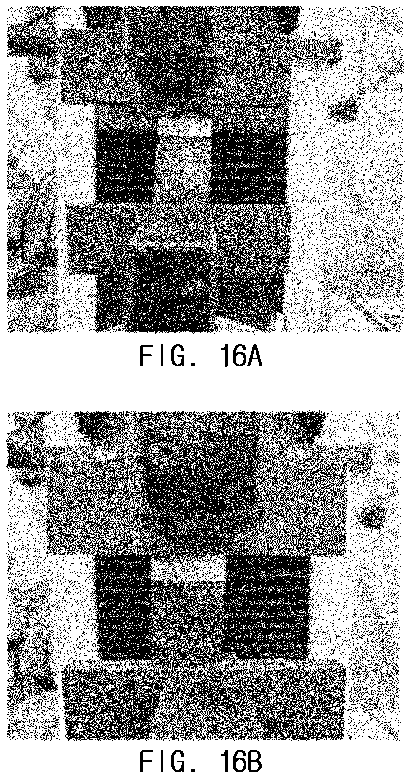

Also, in the tensile strength measurement, it was confirmed that fracture occurred in the uncoated portion as illustrated in FIG. 16A, and that tensile strength degradation did not occur at the end of the active portion insulating layer.

Further, a tensile strength measurement test was further performed on the other manufactured samples, and fracture occurred similarly in the uncoated portion or in the active portion as illustrated in FIG. 16B. Accordingly, it is indicated that the end of the active portion insulating layer did not act as a weak point.

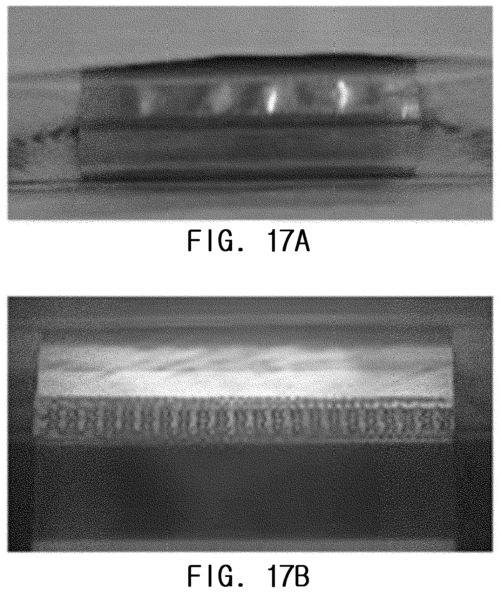

Also, when the cathode tab is manufactured by welding the uncoated portion of the cathode by pre-welding and main welding for the manufactured cathode, the cathode tab (FIG. 17A) after pre-welding and the cathode tab (FIG. 17B) after main welding were imaged, respectively, and were presented in FIG. 17. From FIG. 17, it is indicated that welding quality of the electrode tab was good.

Furthermore, the welding strength of the welding portion was measured using the UTM in the same manner as the tensile strength measurement method, and the results are listed in Table 1. As listed in Table 1, the welding strength also exhibited excellent values, an average of 65.91 kgf and a minimum of 53.89 kgf.

### Embodiment 2

A cathode was manufactured the same as embodiment 1 other than the configuration in which the first uncoated portion insulating layer of the first surface was applied 4.5 mm from the boundary of the uncoated portion and the active portion, and the distance ΔL1 between the end of the first uncoated portion insulating layer and the end of the second uncoated portion insulating layer was 0.5 mm such that the layers mismatched.

The tensile strength of the samples in the Transverse Direction (TD) was measured in the same manner as in embodiment 1, and the results are listed in Table 1. As indicated in Table 1, the tensile strength exhibited an excellent value of 2,317 kgf/mm² on average. This may be because the ends of the active portion insulating layer were formed at different positions on the first surface and the second surface, such that the force applied to the electrode during rolling was distributed, thereby reducing the decrease in tensile strength.

Furthermore, the welding strength also exhibited excellent values, an average of 64.79 kgf and a minimum of 52.89 kgf.

### Comparative example 1

A cathode was manufactured in the same manner as in embodiment 1, other than the configuration in which the first and second active portion insulating layers were formed on the first surface and second surface of the cathode so as to overlap the active portion by 1 mm.

In the same manner as in embodiment 1, a voltage was applied between the uncoated portion and the uncoated portion insulating layer, between the uncoated portion insulating layer and the cathode active material layer, and between the uncoated portion and the cathode active material layer for 0.5 s, and the resistance between the two points was measured, respectively.

The resistance values between the uncoated portion and the uncoated portion insulating layer and between the uncoated portion insulating layer and the cathode active material layer were 5,000 MS2, the maximum resistance value of the measurement limit of the resistance meter. The resistance value between the uncoated portion and the cathode active material layer was 0.1 MΩ.

According to the results, it is indicated that the uncoated portion insulating layer acted as a resistor between the uncoated portion and the cathode active material layer, and even when the anode and cathode were in direct contact with each other, the insulating layer electrically blocked the contact, thereby preventing a short.

The obtained cathode was cut to include both the uncoated portion and the active portion, and five samples were obtained.

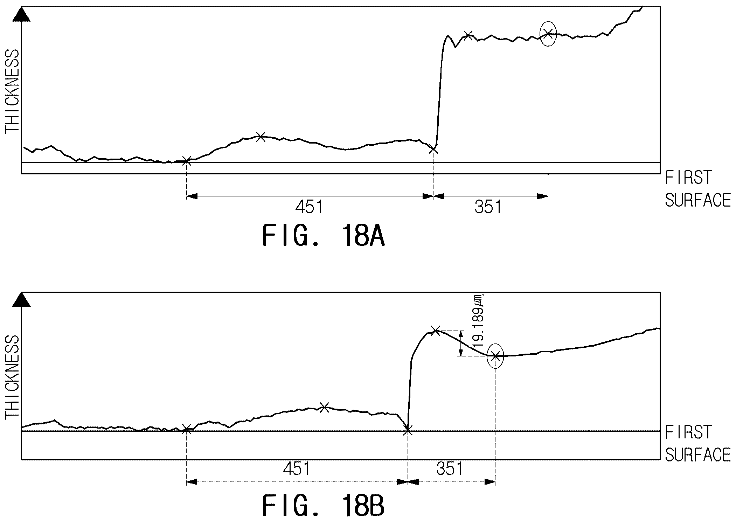

The thickness profile of the first surface of one of the samples was analyzed using a 3D microscope, and the results are provided in FIG. 18. FIG. 18A is the electrode before rolling, and FIG. 18B is the electrode after rolling. As illustrated in FIG. 18, a fine valley was formed at the end (in the circle) of the active portion insulating layer before rolling, and the valley was deeper in the electrode after rolling.

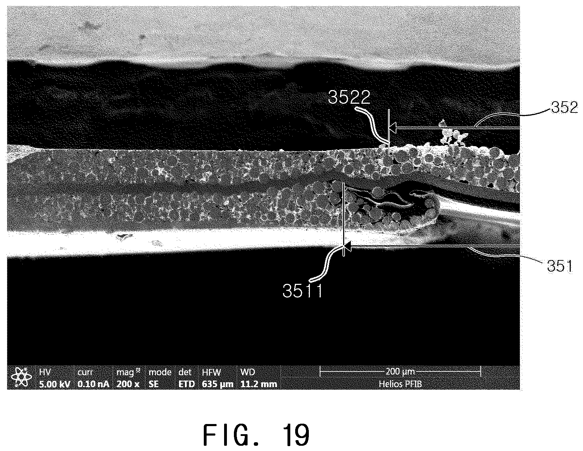

The cross-sectional surface of the same sample was imaged using a scanning electron microscope (SEM), and the results are provided in FIG. 19. As illustrated in FIG. 19, it may be confirmed that the current collector was bent in the region in which the first active portion insulating layer 351 on the first surface of the cathode and the second active portion insulating layer 352 on the second surface of the cathode were formed. This may be because the ends 3511 and 3522 of the active portion insulating layers on both surfaces were formed at similar positions, and accordingly, the pressure is not distributed during the rolling process, and the pressure is concentrated in the valley formed in vicinity of the end of the active portion insulating layer.

In FIG. 19, the positions of the first and second active portion insulating layers do not exactly match, but this is due to an error in the manufacturing process, and the distance between the ends of the two active portion insulating layers is a relatively small difference of less than 100 µm, accordingly the positions of the first and second active portion insulating layers may be considered substantially the same.

The tensile strength in the transverse direction (TD) of the prepared five samples was measured using a universal test machine (UTM), and the average value is listed in Table 1. The tensile strength is the value when the sample was broken. As listed in Table 1, the average value was 1,562 kgf/mm².

In the tensile strength measurement, the samples were broken in the region in which the end of the active portion insulating layer was positioned. According to the results, it is indicated that the tensile strength of the current collector was reduced by the pressure being concentrated on the end of the active portion insulating layer during the rolling process.

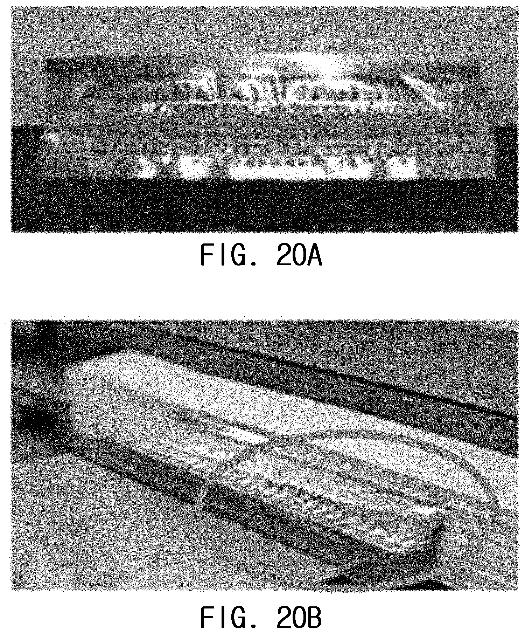

Also, when a cathode tab was manufactured by welding the uncoated portion of the cathode by pre-welding and main welding for the manufactured cathode, the cathode tab (FIG. 20A) after pre-welding and the cathode tab (FIG. 20B) after main welding were imaged, respectively, and are provided in FIGS. 20A and 20B, respectively.

It may be indicated from FIG. 20B that the welding condition was poor. This may indicate that, because the impact applied to the electrode during main welding was transmitted to the boundary between the active portion insulating layer and the cathode active material layer (that is, the end of the active portion insulating layer), electrode fracture occurred, and the electrode was shaken, which indicates that the welding state was poor.

Further, the welding strength of the welding portion was measured and the results are listed in Table 1. As listed in Table 1, the welding strength had an average value of 46.47 kgf and a minimum value of 23.54 kgf, relatively low. This may be due to the presence of a weak point at the end of the active portion insulating layer as described above.

### Comparative example 2

A cathode was manufactured in the same manner as in embodiment 1, other than the configuration in which an insulating layer was not formed using an insulating liquid.

The obtained cathode was cut to include both the uncoated portion and the active portion and five samples were obtained. The tensile strength of the samples in the TD was measured in the same manner as in embodiment 1, and the results are listed in Table 1.

As indicated in Table 1, the tensile strength exhibited an average value of 2,446 kgf/mm², higher than that of comparative example 1 and slightly higher than that of embodiments 1 and 2. This may be because no weak points due to the formation of valleys by not forming an insulating layer were created. Accordingly, when measuring the tensile strength, fracture occurred in the uncoated portion, and the welding strength also had the highest value.

However, since the uncoated portion does not include an insulating layer, the uncoated portion may be in contact with the anode, a short may occur, which may compromise the safety of the battery.

**[Table 1]**

| | | Embodiment 1 | | Embodiment 2 | | Comparative example 1 | | Comparative example 2 | |
|---|---|---|---|---|---|---|---|---|---|
| | | First surface | Second surface | First surface | Second surface | First surface | Second surface | First surface | Second surface |
| Length(mm) of uncoated portion insulating layer | | 5 | 5 | 4.5 | 5.0 | 5 | 5 | - | - |
| Length(mm) of active portion insulating layer | | 1.0 | 0.5 | 1.0 | 0.5 | 1.0 | 1.0 | - | - |
| ΔL 1 (mm)/ΔL2(mm) | | 0/0.5 | | 0.5/0.5 | | 0/0 | | - | |
| UTM disconnection test | Disconnection position | Uncoated portion or active portion | | Uncoated portion or active portion | | End of active portion insulating layer | | Uncoated portion | |
| Tensile strength (kgf/mm²) | | 2,240 | | 2,317 | | 1,562 | | 2,446 | |
| Welding strength (kgf) | Average | 65.91 | | 64.79 | | 46.47 | | 74.46 | |
| | Minimum value | 53.89 | | 52.89 | | 23.54 | | 60.28 | |

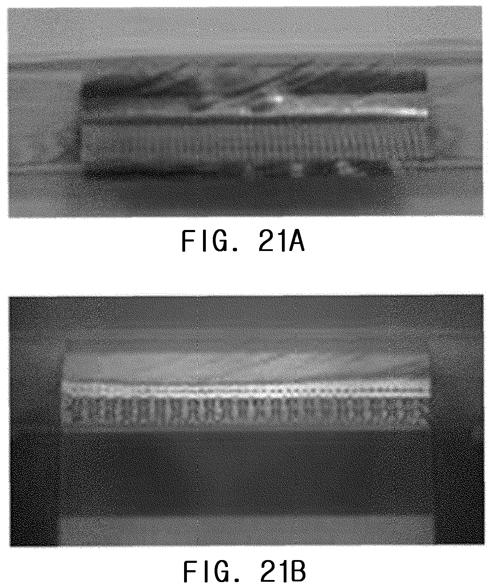

Also, when a cathode tab was manufactured by welding the uncoated portion of the cathode by pre-welding and main welding for the manufactured cathode, the cathode tab (FIG. 21A) after pre-welding and the cathode tab (FIG. 21B) after main welding were imaged, respectively, and are provided in (in FIGS. 21A and 21B. From FIG. 21, it is indicated that, since the tensile strength was not affected by not including another insulating layer, the welding quality of the electrode tab was good.

According to the aforementioned embodiments, during the rolling process for manufacturing the electrode, fracture of the electrode at the boundary between the coated portion and the uncoated portion, or a short occurring during the tab welding process may be suppressed.

Also, yield of manufacturing the electrode may be improved (the defect rate of the electrode may be reduced) and the operating rate of the electrode manufacturing equipment may be improved.

Also, a short due to contact between the anode and the cathode may be suppressed.

An electrode and a secondary battery of the disclosure may be widely applied in green technology fields such as an electric vehicle, a battery charging station, and other solar power generation and wind power generation or the like, using batteries. Also, the electrode and the secondary battery of the disclosure may be used in an eco-friendly electric vehicle, a hybrid vehicle, and the like, to prevent climate change by suppressing air pollution and greenhouse gas emissions.

The present disclosure may also relate to the following aspects.
Aspect 1) An electrode for a secondary battery, the electrode comprising:
   a first surface and a second surface, positioned opposite to the first surface,
   wherein the first surface includes a first active portion in which an electrode active material layer is formed on an electrode current collector, and a first uncoated portion in which an electrode active material layer is not formed,
   wherein the second surface includes a second active portion in which an electrode active material layer is formed on an electrode current collector, and a second uncoated portion in which an electrode active material layer is not formed, independently of the first surface,
   wherein the first surface includes a first active portion insulating layer formed on the first active portion, and a first uncoated portion insulating layer formed on the first uncoated portion,
   wherein the second surface includes a second active portion insulating layer formed on the second active portion, and a second uncoated portion insulating layer formed on the second uncoated portion, and
   wherein a position of an end of the first active portion insulating layer and a position of an end of the second active portion insulating layer are different.
Aspect 2) The electrode of aspect 1, wherein the first active portion insulating layer and first uncoated portion insulating layer are consecutive layers,
   wherein the second active portion insulating layer and the second uncoated portion insulating layer are consecutive layers, and
   wherein a length of the first active portion insulating layer, a length from a boundary between the first active portion and the first uncoated portion to the end of the first active portion insulating layer, and a length of the second active portion insulating layer, a length from a boundary between the second active portion and the second uncoated portion to the end of the second active portion insulating layer, are different.
Aspect 3) The electrode of aspect 2, wherein a length of the first active portion insulating layer is 1.3 or more times to 9 or fewer times than a length of the second active portion insulating layer.
Aspect 4) The electrode of aspect 2, wherein a length of the first active portion insulating layer is 1.5 or more times to 7.5 or fewer times than a length of the second active portion insulating layer.
Aspect 5) The electrode of aspect 2, wherein a length of the first active portion insulating layer is 2 or more times to 9 or fewer times than a length of the second active portion insulating layer.
Aspect 6) The electrode of any one of aspects 2 to 5, wherein a distance between the end of the first active portion insulating layer and the end of the second active portion insulating layer is 0.2 mm or more to 0.9 mm or less.
Aspect 7) The electrode of any one of aspects 2 to 5, wherein a distance between the end of the first active portion insulating layer and the end of the second active portion insulating layer is 0.3 mm or more to 0.8 mm or less.
Aspect 8) The electrode of any one of aspects 2 to 5, wherein a distance between the end of the first active portion insulating layer and the end of the second active portion insulating layer is 0.4 mm or more to 0.7 mm or less.
Aspect 9) The electrode of any one of aspects 2 to 8, wherein each of the first active portion insulating layer and the second active portion insulating layer has a length of 0.1 mm or more to 1.2 mm or less independently.
Aspect 10) The electrode of any one of aspects 2 to 8, wherein a length of the first active portion insulating layer is 0.3 to 1.2 mm, and a length of the second active portion insulating layer is 0.1 to 1.0 mm.
Aspect 11) The electrode of any one of aspects 1 to 10, wherein a position of the end of the first uncoated portion insulating layer and a position of the end of the second uncoated portion insulating layer are the same or different.
Aspect 12) The electrode of any one of aspects 1 to 10, wherein a distance between the end of the first uncoated portion insulating layer and the end of the second uncoated portion insulating layer is 0.5 mm or less.
Aspect 13) The electrode of any one of aspects 1 to 12, wherein a length of each of the first uncoated portion insulating layer and the second uncoated portion insulating layer is 1 to 12 mm independently.
Aspect 14) The electrode of any one of aspects 1 to 13, wherein each of the first active portion insulating layer, the first uncoated portion insulating layer, the second active portion insulating layer and the second uncoated portion insulating layer has a thickness of 3 to 40 µm independently.
Aspect 15) The electrode of any one of aspects 1 to 14, further comprising:
   an electrode tab including the first uncoated portion or the second uncoated portion.
Aspect 16) The electrode of any one of aspects 1 to 15, wherein the electrode is a cathode or an anode.
Aspect 17) The electrode of any one of aspects 1 to 16, further comprising:
   a valley formed in each of a region in which the end of the first active portion insulating layer is present and a region in which the end of the second active portion insulating layer is present independently,
   wherein positions of the valleys in the first surface and the second surface are different.
Aspect 18) A secondary battery comprising:
   at least one anode and at least one cathode,
   wherein the anode, the cathode, or a combination thereof is the electrode for a secondary battery of any one of aspects 1 to 17.

Only specific examples of implementations of certain non-limiting embodiments may be described. Variations, improvements and enhancements of the disclosed embodiments and other embodiments may be made with respect to the disclosure of this patent document.

## Claims

1. An electrode for a secondary battery, the electrode comprising:
a first surface and a second surface, positioned opposite to the first surface,
wherein the first surface includes a first active portion in which an electrode active material layer is formed on an electrode current collector, and a first uncoated portion in which an electrode active material layer is not formed,
wherein the second surface includes a second active portion in which an electrode active material layer is formed on an electrode current collector, and a second uncoated portion in which an electrode active material layer is not formed, independently of the first surface,
wherein the first surface includes a first active portion insulating layer formed on the first active portion, and a first uncoated portion insulating layer formed on the first uncoated portion,
wherein the second surface includes a second active portion insulating layer formed on the second active portion, and a second uncoated portion insulating layer formed on the second uncoated portion, and
wherein a position of an end of the first active portion insulating layer and a position of an end of the second active portion insulating layer are different.

2. The electrode of claim 1, wherein the first active portion insulating layer and first uncoated portion insulating layer are consecutive layers,
wherein the second active portion insulating layer and the second uncoated portion insulating layer are consecutive layers, and
wherein a length of the first active portion insulating layer, a length from a boundary between the first active portion and the first uncoated portion to the end of the first active portion insulating layer, and a length of the second active portion insulating layer, a length from a boundary between the second active portion and the second uncoated portion to the end of the second active portion insulating layer, are different.

3. The electrode of claim 2, wherein a length of the first active portion insulating layer is 1.3 or more times to 9 or fewer times than a length of the second active portion insulating layer.

4. The electrode of claim 2 or 3, wherein a distance between the end of the first active portion insulating layer and the end of the second active portion insulating layer is 0.2 mm or more to 0.9 mm or less.

5. The electrode of any one of claims 2 to 4, wherein each of the first active portion insulating layer and the second active portion insulating layer has a length of 0.1 mm or more to 1.2 mm or less independently.

6. The electrode of any one of claims 2 to 4, wherein a length of the first active portion insulating layer is 0.3 to 1.2 mm, and a length of the second active portion insulating layer is 0.1 to 1.0 mm.

7. The electrode of any one of claims 1 to 6, wherein a position of the end of the first uncoated portion insulating layer and a position of the end of the second uncoated portion insulating layer are the same or different.

8. The electrode of any one of claims 1 to 6, wherein a distance between the end of the first uncoated portion insulating layer and the end of the second uncoated portion insulating layer is 0.5 mm or less.

9. The electrode of any one of claims 1 to 8, wherein a length of each of the first uncoated portion insulating layer and the second uncoated portion insulating layer is 1 to 12 mm independently.

10. The electrode of any one of claims 1 to 9, wherein each of the first active portion insulating layer, the first uncoated portion insulating layer, the second active portion insulating layer and the second uncoated portion insulating layer has a thickness of 3 to 40 µm independently.

11. The electrode of any one of claims 1 to 10, further comprising:
an electrode tab including the first uncoated portion or the second uncoated portion.

12. The electrode of any one of claims 1 to 11, wherein the electrode is a cathode or an anode.

13. The electrode of any one of claims 1 to 12, further comprising:
a valley formed in each of a region in which the end of the first active portion insulating layer is present and a region in which the end of the second active portion insulating layer is present independently,
wherein positions of the valleys in the first surface and the second surface are different.

14. A secondary battery comprising:
at least one anode and at least one cathode,
wherein the anode, the cathode, or a combination thereof is the electrode for a secondary battery of any one of claims 1 to 13.
